Europäisches Patentamt

European Patent Office

Office européen des brevets

(19)

(11) **EP 0 768 667 B1**

(12) **EUROPEAN PATENT SPECIFICATION**

(45) Date of publication and mention
of the grant of the patent:
**05.01.2000 Bulletin 2000/01**

(51) Int Cl.⁷: **G11B 25/06**, G11B 31/00,
G11B 5/53, G11B 23/02

(21) Application number: **96302879.0**

(22) Date of filing: **25.04.1996**

(54) **Magnetic recording and reproducing apparatus and video camera using same apparatus**

Magnetisches Aufzeichnungs- und Wiedergabegerät und Videokamera damit

Appareil d'enregistrement et de reproduction magnétique et caméra vidéo l'utilisant

(84) Designated Contracting States:
**DE FR GB**

(30) Priority: **12.10.1995 JP 29025595**

(43) Date of publication of application:
**16.04.1997 Bulletin 1997/16**

(73) Proprietor: **VICTOR COMPANY OF JAPAN, LTD.**
**Yokohama-Shi, Kanagawa-Ken (JP)**

(72) Inventors:
• **Miyamoto, Ritsu**
**Yokohama-shi, Kanagawa-ken (JP)**
• **Tamaki, Yoshihiro**
**Yokohama-shi, Kanagawa-ken (JP)**
• **Sato, Noriyuki**
**Yokohama-shi, Kanagawa-ken (JP)**
• **Futa, Naohito**
**Yokohama-shi, Kanagawa-ken (JP)**

(74) Representative: **Crawford, Andrew Birkby et al**
**A.A. Thornton & Co.**
**235 High Holborn**
**London WC1V 7LE (GB)**

(56) References cited:
**EP-A- 0 365 092**  **EP-A- 0 393 706**
**EP-A- 0 622 799**  **DE-A- 3 043 481**
**DE-A- 3 521 327**  **DE-A- 4 304 506**
**FR-A- 1 424 870**  **US-A- 3 510 605**
**US-A- 4 943 878**  **US-A- 5 274 506**

• **PATENT ABSTRACTS OF JAPAN vol. 008, no.**
**228 (P-308), 19 October 1984 & JP 59 107439 A**
**(HITACHI SEISAKUSHO KK), 21 June 1984,**
• **PATENT ABSTRACTS OF JAPAN vol. 008, no.**
**275 (P-321), 15 December 1984 & JP 59 142773 A**
**(SONY KK), 16 August 1984,**

**Description**

BACKGROUND OF THE INVENTION

Field of the Invention

The present invention relates to a magnetic recording and reproducing apparatus provided with a dedicated magnetic tape not removed therefrom. Further, the invention relates to a video camera using the magnetic recording and reproducing apparatus.

Description of the Prior Art

In the magnetic recording and reproducing apparatus such as a video tape recorder (VTR), a digital audio tape recorder (DAT), etc., in general, it is well known that a magnetic tape is pulled out of a tape cassette by use of movable tape loading members; the pulled-out magnetic tape is wound in helical manner around a rotary drum rotated together with a magnetic head over a predetermined angle; and video and/or audio signals are recorded and reproduced by scanning the magnetic tape in helical manner by use of the rotating magnetic head.

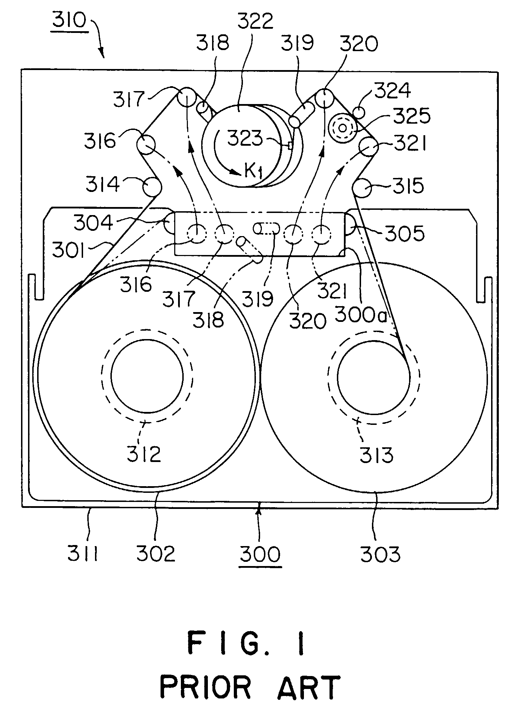

Figure 1 is a plane view showing a conventional magnetic tape recording and reproducing apparatus 310. As shown, a tape cassette 300 is removably mounted on a chassis 311 by use of a cassette holder (not shown) on the front side of the apparatus 310.

The tape cassette 300 is shown under the initial condition that a magnetic tape 301 is not yet loaded on the apparatus 310. The magnetic tape 301 is wound around both a supply reel 302 and a take-up reel 303. More in detail, the magnetic tape 301 taken out of the supply reel 302 is put over between a semicircular supply side pole 304 and a semicircular take-up side pole 305 and wound around the take-up reel 303. Further, a loading pocket 300a is formed at an end of the tape cassette 300 such that the bottom surface of the pocket 300a is opened between the poles 304 and 305.

The supply reel 302 and the take-up reel 303 are mounted on a supply reel base 312 and a take-up reel base 313 both rotatably mounted on the chassis 311, respectively.

Further, within the magnetic recording and reproducing apparatus 310 and in the vicinity of the end of the tape cassette 300, some tape loading members are disposed in correspondence to the supply reel (302) side and the take-up reel (303) side.

In more detail, two tape guide rollers 314 and 315 are stood vertically on the flat chassis 311 and on the outer left and right sides, respectively, of the end of the tape cassette 300. Further, within the loading pocket 300a of the tape cassette 300, there are arranged a supply side tape pulling-out tape guide 316, a tape winging-up tape guide 317, a tape supply side inclined pole 318, a tape wind-up side inclined pole 319, a tape winding-up tape guide 320, and a tape pulling-out tape guide 321 as shown by dot-dot-dashed lines in Fig. 1. These tape loading members 316 to 321 are all so arranged as to be movable.

Further, a rotary drum 322 having a magnetic head integral therewith is mounted such that it is rotatable in an arrow direction $K_1$ (in counterclockwise direction).

The magnetic tape 301 is pulled out of the tape cassette 300 by use of these tape loading members 316 to 321, and is wound around the rotary drum 322 over a predetermined angle. Video and/or audio signals are recorded in and reproduced from the magnetic tape 301 by the magnetic head 323 scanned in helical manner. The recording and reproduction are done while the magnetic tape 301 is moving as it is pinched by a capstan 324 and a pinch roller 325 moved toward and away from the capstan 324.

In the conventional magnetic recording and reproducing apparatus 310, since the tape cassette 300 can be removably loaded on the chassis 311 via cassette holder (not shown), the tape cassette 300 can be exchanged, and therefore is very convenient. On the other hand, the cassette holder (not shown) for loading and unloading the tape cassette and further various movable tape loading members 316 to 321 for pulling out the magnetic tape 300 toward the rotary drum 322 are inevitably required. There exists a problem in that the apparatus 310 is bulky due to a complicated construction and thereby the space utilization efficiency of the apparatus 310 is low. In addition, the apparatus 310 must be adjusted accurately during the manufacturing process in order to retain an excellent interchangeability of the magnetic tape 301.

At the initial development stage of the video tape recorder (VTR), a pair of reels were mounted on a pair of reel bases and the magnetic tape was wound around the rotary drum manually, without use of a tape cassette. There was a problem that the apparatus was bulky, in addition to a short magnetic tape life.

When the conventional magnetic recording and reproducing apparatus 310 is required to be built in a video camera, there exists a problem in that the video camera inevitably becomes bulky.

However, a quality of recent magnetic tapes is improved more and more and thereby the magnetic tapes can be used repeatedly to such an extent about 500 times. There will exist such a demand for a throwaway magnetic recording and reproducing apparatus and a video camera using the same apparatus in the near future. This apparatus will record and reproduce audio and/or video signals by use of only a dedicated magnetic tape, without exchanging the tape cassette with new one.

Prior art document EP-A-0 622 799 describes a magnetic recording and reproducing apparatus and a video camera using the same apparatus. The construction, however of the magnetic recording and reproducing apparatus which is provided with a non-removable magnetic dedicated tape is complicated in that it requires cumbersome means for guiding and keeping the tape in its path from the supply reel to the take-up reel.

SUMMARY OF THE INVENTION

With these problems in mind, therefore, it is the object of the present invention to provide a throwaway type magnetic recording and reproducing apparatus and a video camera using the same apparatus. only after the camera has been connected to a playback device. The housing of the camera has an opening which is closed by a removable casing as long as the camera is used to photograph an object. However, during playback, the casing is removed to expose the opening which permits a capstan motor on the playback device to engage with the capstan in the housing. Further apertures are provided for positioning the housing in the playback device.

The present invention provides a magnetic recording and reproducing apparatus in which a pair of reels around each of which a magnetic tape is wound are mounted on a pair of reel bases rotatably disposed on a chassis, the apparatus comprising: a drum section disposed along a predetermined tape path and around which the magnetic tape is wound in helical manner;

a tape driving mechanism to drive the magnetic tape at a constant travel speed;
a plurality of tape guides fixedly disposed along the predetermined tape path on the chassis, to guide the travel of the magnetic tape driven by the tape driving mechanism;
a recording and reproducing circuit to record and reproduce data on and from the travelling magnetic tape; and
a casing in which the drum section, the tape driving mechanism and the tape guides are installed, roughly airtightly closed at a peripheral portion thereof, for preventing the magnetic tape from being removed to the outside of the apparatus,

the apparatus characterized by comprising:

at least one inclined pole fixedly disposed along the predetermined tape path (P$_1$,P$_2$) on the chassis, to guide travel of the magnetic tape,
wherein, the drum section having a fixed drum to which a first rotary transformer is fixed, and a rotatable drum to which a magnetic head and a second rotary transformer are fixed, both the magnetic head and the second rotary transformer being attached to a printed circuit board, the rotatable drum being disposed coaxially with the fixed drum in such a way that the first and second rotary transformers face each other to receive and transmit signals of the magnetic head therebetween, and a top surface of each reel being located on the fixed drum side, each reel is formed as flange-less type and with a reel hub fitted to each reel base, and the apparatus further comprises restriction means disposed close to at least one of a lower end portion and an upper end portion of the magnetic tape wound around the reel hubs, to restrict dislocation of the magnetic tape in a width direction thereof.

The drum section may be provided such that the rotatable drum is disposed over the fixed drum and the fixed and rotatable drums are disposed within a space between another surface of each reel and an end of the apparatus.

The drum section may be provided such that the fixed drum is disposed over the rotatable drum, and the fixed drum and a portion of the rotatable drums are disposed within a space between another surface position of each an end of the apparatus.

Each reel may be formed as flange-less type and with a reel-hub fitted to each reel base.

When the reel is formed as flange-less type, the tape may be wound around the reel hubs so as to satisfy the following positional relationship: $(D_1 + D_2) < L < 2 \times D_1$, where $D_1$ denotes a maximum winging diameter of the magnetic tape wound around one of the each reel hubs, $D_2$ denotes a minimum winging diameter of the magnetic tape wound around another of the reel hubs, and L denotes a distance between the reel bases.

The restriction means may include a plurality of restriction plates arranged wide enough across centers of the reels and disposed close to upper and lower surfaces of the reels.

The apparatus may comprise a connector for electrically connecting the apparatus to a camera in such a way that the apparatus is detachable to camera.

BRIEF DESCRIPTION OF THE DRAWINGS

Fig. 1 is a plane view showing a conventional magnetic recording and reproducing apparatus;
Fig. 2 is a plane view showing a first embodiment of the magnetic recording and reproducing apparatus according to the present invention;
Fig. 3 is a longitudinal cross-sectional view showing the state where a pair of the reel hubs around which the magnetic tape is wound are mounted on a pair of the reel bases, in the first embodiment of the magnetic recording and reproducing apparatus according to the present invention;
Fig. 4 is a longitudinal cross-sectional view showing the rotary drum mounted in the first embodiment of the magnetic recording and reproducing apparatus according to the present invention;
Figs. 5A and 5B are front and bottom views showing the state where the magnetic head and the rotatable side rotary transformer are mounted integrally on the printed circuit board within the rotary drum shown in Fig. 4;

Fig. 6 is a front view showing a height of the apparatus on the basis of the positional relationship between the reels and the rotary drum, in the first embodiment of the magnetic recording and reproducing apparatus according to the present invention;

Fig. 7 is a front view for assistance in explaining the combination head having the erase head and the control head integrally, in the first embodiment of the magnetic recording and reproducing apparatus according to the present invention;

Fig. 8 is a perspective view showing the roughly airtightly closed casing for preventing the magnetic tape from being removed, in the first embodiment of the magnetic recording and reproducing apparatus according to the present invention;

Figs. 9A and 9B are plane and right side views showing a second embodiment of the magnetic recording and reproducing apparatus according to the present invention;

Fig. 10 is a longitudinal cross-sectional view showing the state where a pair of the reel hubs around which the magnetic tape is wound are mounted on a pair of the reel bases, in the second embodiment of the magnetic recording and reproducing apparatus according to the present invention;

Fig. 11 is a longitudinal cross-sectional view showing the rotary drum mounted in the second embodiment of the magnetic recording and reproducing apparatus according to the present invention;

Figs. 12A and 12B are front and bottom views showing the state where the magnetic head and the rotatable side rotary transformer are mounted integrally on the printed circuit board within the rotary drum shown in Fig. 11;

Fig. 13 is a front view showing the height of the apparatus on the basis of the positional relationship between the reels and the rotary drum of the second embodiment of the magnetic recording and reproducing apparatus according to the present invention; and

Fig. 14 is a perspective view showing the video camera using the magnetic recording and reproducing apparatus according to the present invention; and

## DETAILED DESCRIPTION OF THE PREFERRED EMBODIMENTS

The embodiments of the magnetic recording and reproducing apparatus and the video camera using the same apparatus according to the present invention will be described hereinbelow with reference to the attached drawings.

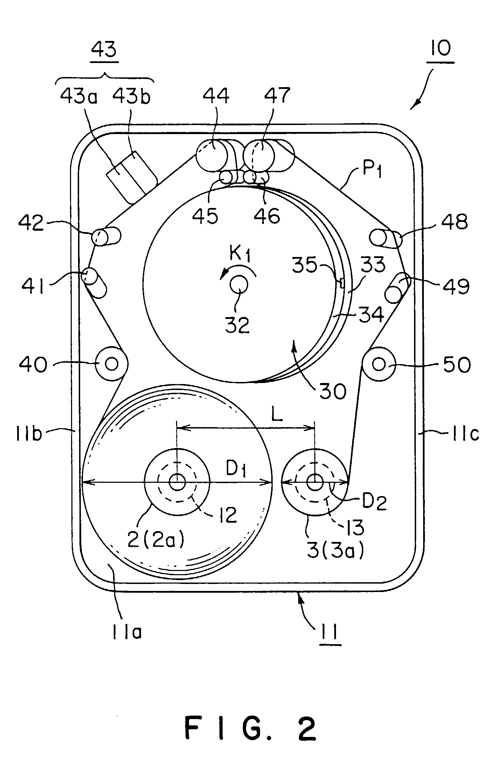

Figure 2 shows the first embodiment of the magnetic recording and reproducing apparatus according to the present invention. The first embodiment is characterized in that: a magnetic tape 1 is permanently loaded within a magnetic recording and reproducing apparatus 10 without use of any tape cassette; and audio and/or video signals can be recorded and reproduced in and from the loaded magnetic tape 1 through helical scanning operation of a magnetic head 35 mounted on a rotatable drum 34 of a rotary drum section 30.

As shown, on the front side of the apparatus 10, a pair of reels 2 and 3 around which the magnetic tape 1 is wound are rotatably mounted on a pair of reel bases 12 and 13, respectively. The reel bases 12 and 13 are disposed on a chassis 11. Further, on the rear side of the apparatus 10, a rotatable drum 34 of a rotary drum section 30 (described later in detail) is disposed rotatably in an arrow direction $K_1$ (counterclockwise direction).

Here, the left side reel 2 is a supply reel and the right side reel 3 is a take-up reel so that the rotatable drum 34 of the rotary drum section 30 is rotated in the arrow direction $K_1$. Each of these supply reel 2 and take-up reel 3 is of flange-less type such that two reel flanges are not formed to restrict the magnetic tape 1 in the width direction. Therefore, the magnetic tape 1 is wound around a pair of small-diameter reel hubs 2a and 3a. These reel hubs 2a and 3a are fixedly fitted to the reel bases 12 and 13, respectively, so as to be rotated therewith.

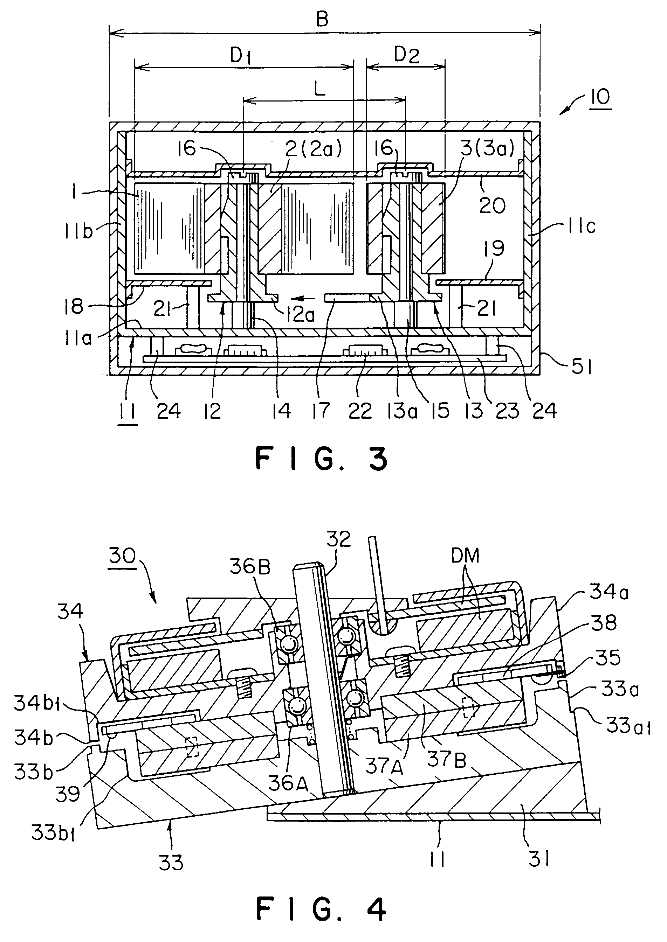

Here, as shown in Fig. 3 in an enlarged scale, a supply reel axle 14 and a take-up reel axle 15 are fixed on a flat bottom surface 11a of the chassis 11. The axles 14 and 15 are so provided that they are separated from each other by a distance L. The supply reel base 12 and the take-up reel base 13 are rotatably fitted to the left side axle 14 and the right side axle 15, respectively. The supply reel 2 and the take-up reel 3 are fitted to the supply reel base 12 and the take-up reel base 13, respectively. The reels 2 and 3 are not easily removed from the reel bases 12 and 13 by use of a screw 16 attached to each upper end portion of the reel axles 14 and 15.

In addition, an idler gear 17 is pivotally supported by an idler arm (not shown) between the supply reel base 12 and the take-up reel base 13. In Fig. 3. the idler gear 17 is engaged with a gear portion 13a of the reel base 13 to rotate the reel base 13. As shown by an arrow, the idler gear 17 can be engaged with a gear portion 12a of the reel base 12 to rotate the reel base 12.

A rotating power of the idler gear 17 is transmitted from a reel motor (not shown) through a speed reduction mechanism with a gear train (not shown). Further, the reel motor is controlled by a control pulse (described later) so that the magnetic tape 1 wound around the supply reel 2 and the take-up reel 3 can be driven at a constant speed. As described above, in this apparatus 10, the magnetic tape 1 is driven at a constant travel speed by a reel-driving method, not a conventional capstan-driven method.

As already described, the supply reel 2 and the take-up reel 3 are formed with no reel flange in order to reduce the size of the apparatus 10. The distance L between the center of the supply reel axle 14 and that of the take-up reel axle 15 thus can be determined short, as compared with the case where reels formed with reel flanges are used. In more detail, the reel axles 14 and 15 are so provided that the distance L therebetween is set longer than $D_1 + D_2$, and shorter than $2 \times D_1$ ($D_1 + D_2 < L < 2 \times D_1$), where $D_1$ denotes the maximum winging diameter of the magnetic tape 1 wound around the supply reel hub 2a (take-up reel hub 3a) and $D_2$ denotes the minimum winging diameter of the magnetic tape 1 wound around the reel hub 3a (reel hub 2a).

Accordingly, during the travel of the magnetic tape 1, when the supply reel 2 becomes maximum winding diameter $D_1$, the take-up reel 3 becomes the minimum winding diameter $D_2$. On the other hand, when the supply reel 2 becomes the minimum winding diameter $D_2$, the take-up reel 3 becomes the maximum winding diameter $D_1$. In other words, since the distance L between the reel bases 12 and 13 is determined as described above, it is possible to reduce the width dimension B of the apparatus 10. The weight of the apparatus 10 thus can be also reduced.

As already described, the supply reel 2 and the take-up reel 3 are both formed as flange-less type. The magnetic tape 1 wound around the reels 2 and 3 thus may be dislocated in the width direction due to an external shock or during the tape travel. To overcome this, three restriction plates 18, 19 and 20 are disposed in the close vicinity of the lower and upper end portions of the magnetic tape 1 wound around the reels 2 and 3. This arrangement restricts such a dislocation.

The plate arrangement will be described in detail. The restriction plate 18 is provided for restricting the dislocation of the lower end portion of the magnetic tape 1 on the supply reel (2) side; and is attached to a bottom surface 11a of the chassis 11 via a stud 21 and to a left side wall 11b of the chassis 11. The restriction plate 19 is provided for restricting the dislocation of the lower end portion of the magnetic tape 1 on the take-up reel (3) side; and is attached to a bottom surface 11a of the chassis 11 via another stud 21 and to a right side wall 11c of the chassis 11. And the restriction plate 20 is provided for restricting the dislocation of the upper end portion of the magnetic tape 1 on both the supply reel (2) side and the take-up reel (3) side; and is disposed extending horizontally over between the side walls 11b and 11c. These three restriction plates 18, 19 and 20 are arranged wide enough over a center line connecting both the centers of the supply reel axle 14 and the take-up reel axle 15 and in the vicinity of the upper and lower ends of both the reels 2 and 3. In this case, when both the lower and upper portions of the magnetic tape 1 are restricted, it is possible to most effectively restrict the dislocation of the magnetic tape 1 in the width direction. Without being limited thereto, however, as far as any one of the upper and lower portions of the magnetic tape is restricted, it is possible to effectively prevent the magnetic tape 1 from being dislocated in the width direction.

Further, a printed circuit board 23 is attached to the rear side of the bottom surface 11a of the chassis 11 by use of studs 24. Mounted on the printed circuit board 23 are various electronic parts 22 for recording and reproduction operation. Here, a battery is used as the voltage supply of the printed circuit board 23.

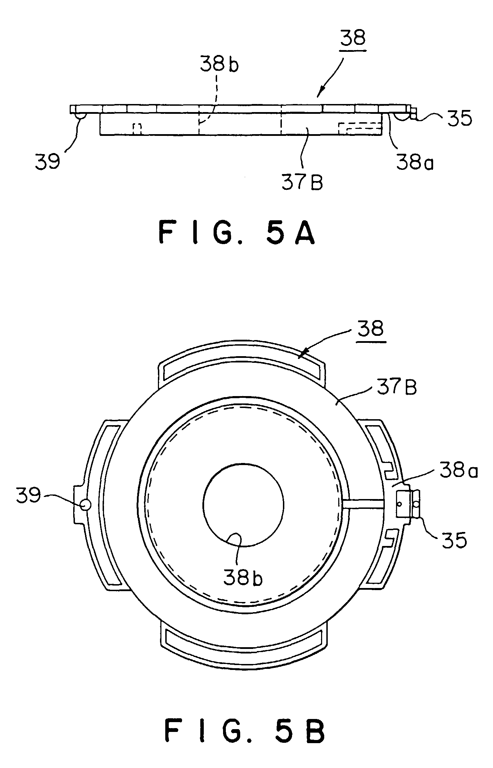

The rotary drum section 30 provided on the rear side of the apparatus 10 in Fig. 2 will be described hereinbelow with reference to Figs. 4, 5A and 5B.

As shown in Fig. 4, in the rotary drum section 30, a triangular shaped drum base 31 is fixed on the chassis 11. Further, fixed on the drum base 31 is a fixed drum 33 into which a drum axle 32 is pressure fitted. Over the fixed drum 33, a rotatable drum 34 having a magnetic head 35 is rotatably mounted coaxially with the drum 33. In more detail, the rotatable drum 34 is supported rotatably in the counterclockwise direction (the direction $K_1$ in Fig. 2) by two bearings 36A and 36B attached to the drum axle 32. Therefore, the lower side fixed drum 33 is located in the close vicinity of the chassis (11) side, and the upper side rotatable drum 34 is located away from the chassis (11) side.

The fixed drum 33 and the rotatable drum 34 are both formed into a cylindrical shape by use of a resin material. The reason why a resin is used is that the apparatus 10 can be constructed at such a low cost as to become a throwaway apparatus, that is, to such an extent as to be durable during the life time of the magnetic tape 1.

In Fig. 4, an outer circumferential surface 33a of the fixed drum 33 and an outer circumferential surface 34a of the rotatable drum 34 are formed in the same diameter. A lead $33a_1$ for guiding the magnetic tape 1 in helical manner is formed in the surface 33a. Instead of the lead $33a_1$, two flanged and inclined poles of different heights may be disposed in the vicinity of the tape inlet and outlet sides of the rotary drum section 30. And, the magnetic head 35 is attached to the lower surface (34b) side of the rotatable drum 34 near the surface 34a. The magnetic head 35 thus projects slightly downward.

A circular recessed portion $33b_1$ is formed on the upper surface (33b) side of the fixed drum 33 with the drum axle 32 as its center. And, a fixed side rotary transformer 37A is fixed to the recessed portion $33b_1$ by use of a bonding agent.

Further, another circular recessed portion $34b_1$ is formed on the lower surface (34b) side of the rotatable drum 34 with the drum axle 32 as its center. The lower surface 34b faces the upper surface 33b. And, a rotatable side rotary transformer 37B is fixed to the recessed portion $34b_1$ by use of a bonding agent.

Figures 5A and 5B show the arrangement made before the rotatable side rotary transformer 37B is perfectly fixed to the circular recessed portion $34b_1$ of the rotatable drum 34. As shown, the rotatable side rotary transformer 37B is previously attached to the lower surface (38a) side of a roughly circular printed circuit board 38 coaxially with a central hole 38b. The magnetic head 35 is previously attached to the outer circumferential portion of the lower surface 38a of the printed circuit board 38. And, a balancing weight 39 of the same weight as that of the magnetic head 35 is also previously attached to the outer circumferential portion of the lower surface 38a. The balancing weight 39 is attached at such a position that it is separated from the magnetic head 35 by 180 degrees so as to face each other. Here, the magnetic head 35 is so constructed as to record and reproduce video and audio signals in and from the magnetic tape 1 simultaneously.

After this previous arrangement, the rotatable side rotary transformer 37B mounted on the printed circuit board 38 is perfectly fixed to the circular recessed portion $34b_1$ of the rotatable drum 34. The rotary transformer 37B is fixed in such a way that it faces the fixed side rotary transformer 37A fixed to the circular recessed portion $33b_1$ of the fixed drum 33 with an extremely small gap between the transformers 37A and 37B.

In the first embodiment, the apparatus 10 is of self recording and reproducing type and thereby the magnetic tape 1 is not exchanged with another one. It is thus possible to directly mount the magnetic head 35 on the printed circuit board 38 without need of any height adjustment of the magnetic head 35 relative to the magnetic tape 1. In addition, the track width of the magnetic head 35 can be reduced as narrow as 10 μm, for instance. Further, the magnetic head 35 and the rotatable side rotary transformer 37B can be connected to each other by soldering them directly to the pattern of the printed circuit board 38. It is thus possible to facilitate the mounting construction of the magnetic head 35 and the rotatable side rotary transformer 37B onto the rotatable drum 34. This results in improvement of both the workability and the reliability of the apparatus 10.

Further, in this construction, a drum motor DM mounted on the rotatable drum (34) side is driven to rotate the magnetic head 35, the rotatable side rotary transformer 37B, and the printed circuit board 38 all together with the rotatable drum 34. Audio and/or video signals of the magnetic head 35 thus can be received and transmitted between the rotatable side rotary transformer 37B and the fixed side rotary transformer 37A.

Here, a plurality of tape guide members arranged along a predetermined tape path $P_1$ to wind the magnetic tape 1 around the rotary drum section 30 will be described hereinbelow with reference to Fig. 2.

Those guide members are fixedly arranged along the predetermined tape path $P_1$ on the bottom surface 11a of the chassis 11. More in detail, the guide members are arranged such that they are divided into the right and left sides of the rotary drum section 30, that is, the supply reel (2) side and the take-up reel (3) side.

In Fig. 2, on the supply reel (2) side, a first tape guide roller 40 with a flange is stood vertically on the flat bottom surface 11a and near the left side wall 11b (Fig. 3) of the chassis 11. The guide roller 40 guides the magnetic tape 1 taken out of the supply reel 2 in parallel to the bottom surface 11a of the chassis 11. On the downstream side of the guide roller 40, a first inclined pole 41 and a second inclined pole 42 are fixedly disposed to guide the magnetic tape 1 obliquely upward. A hybrid head 43 is disposed on the downstream side of the pole 42. The hybrid head 43 has an erase head 43a and a control head 43b formed integral with each other. In addition, a second tape guide roller 44 with a flange and a third inclined pole 45 are fixedly disposed on a high-stepped portion (not shown) formed integral with the flat bottom surface 11a of the chassis 11. They are arranged in such a way as to be inclined along the magnetic tape 1 raised obliquely upward on the downstream side of the hybrid head 43, in the vicinity of the tape inlet side, and further on the rear side of the rotary drum section 30.

On the other hand, on the take-up reel (3) side, a fourth inclined pole 46 and a third tape guide roller 47 with a flange are fixedly disposed on a low-stepped portion (not shown) formed integral with the flat bottom surface 11a of the chassis 11. They are arranged in such a way as to be inclined along the magnetic tape 1 lowered obliquely downward by the lead $33a_1$ (Fig. 4) formed in the fixed drum 33 in the vicinity of the tape outlet of the rotary drum section 30. Further, on the downstream side of the guide roller 47, a fifth inclined pole 48 and a sixth inclined pole 49 are fixedly provided to guide the magnetic tape 1 lowered obliquely downward by the lead $33a_1$ formed in the fixed drum 33. Further, on the downstream side of the pole 49, a fourth tape guide roller 50 with a flange is stood vertically on the flat bottom surface 11a and near the right side wall 11c (Fig. 3) of the chassis 11. The guide roller 50 guides the magnetic tape 1 into the take-up reel 3 in parallel to the bottom surface 11a of the chassis 11.

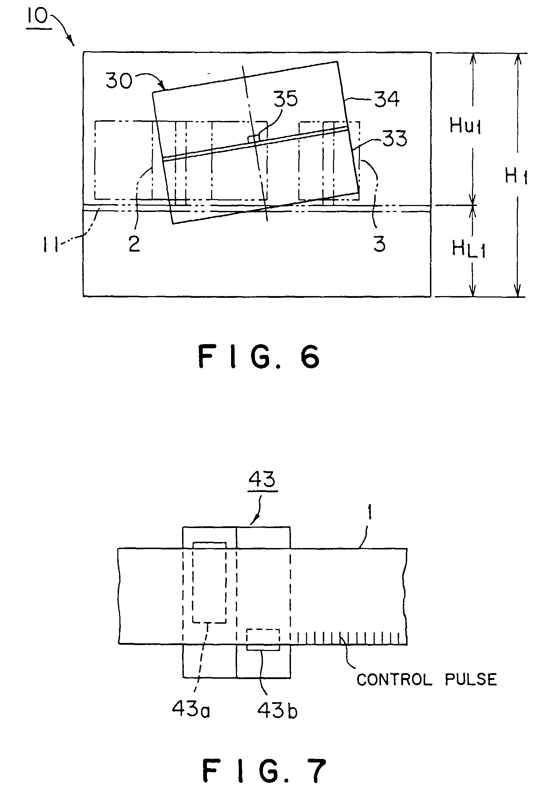

In this first embodiment, as shown in Fig. 6, the supply reel 2 and the take-up reel 3 are located on the fixed drum (33) side in height with respect to the rotary drum 34. This is because, after the magnetic tape 1 has been wound around the rotary drum section 30 over about 340 degree range, the magnetic tape 1 taken out of the rotary drum section 30 is repositioned to the height of the take-up reel 3 by use of the four inclined poles 46 to 49.

Figure 6 shows height relationship among the reels 2 and 3, and the drums 33 and 34. In the figure, components, such as a reel motor (not shown), are housed in a space within a height $H_{L1}$. The height $H_{L1}$ denotes the height between the lower ends of the supply reel 2 and the take-up reel 3, and the bottom surface of the apparatus 10. Further, the fixed drum 33 and the rotatable drum 34 of the rotary drum section 30 are housed in a space within a height $H_{U1}$. The height $H_{U1}$ denotes the height between the lower ends of the reels 2 and 3, and the upper end surface of the apparatus 10.

In this first embodiment, although the six inclined poles 41, 42, 45, 46, 48 and 49 are arranged along the predetermined tape path $P_1$. However, without being limited only thereto, there exists no problem as far as at least one pole is disposed on the supply reel side or the take-up reel side. This is disclosed in Japanese Patent Laid-Open No. 63(1988)-275067.

Further, in this embodiment, the magnetic tape 1 wound around both the supply reel 2 and the take-up reel 3 is previously loaded along the predetermined tape path $P_1$ without being loaded and unloaded on and from the rotary drum section 30. And, the tape path $P_1$ is determined by the fixedly disposed tape guide members 40 to 50 and the rotary drum section 30. It is thus possible to record and reproduce audio and/or video signals in and from the magnetic tape 1 immediately. Further, the tape loading operation by use of tape loading members is not required that is different from the conventional apparatus. A conventional cassette holder and movable tape loading members are not required. Thus, the construction of the apparatus 10 can be simplified and its weight can be reduced, and thereby the reliability thereof can be improved. As a result, since the portability of the apparatus 10 can be improved, it is possible to realize a magnetic recording and reproducing apparatus 10 provided with a liquid crystal television set, for instance.

Further, as shown in Fig. 7, the erase head 43a of the hybrid head 43 is so constructed that it erases audio and video signals recorded on the magnetic tape 1 but does not erase prerecorded control pulses. The control head 43b is used to record the control pulses in the lower end portion of the magnetic tape 1 and reproduce the control pulses therefrom. The control pulses are previously recorded at predetermined intervals from the start to the end of a non-recorded magnetic tape 1 when the magnetic tape 1 is shipped from the factory. When audio and video signals are recorded and reproduced in and from the magnetic tape 1, a reel motor (not shown) is controlled according to the diameter of the magnetic tape 1 wound around the reels. This motor control is such that the recorded control pulses can be detected at predetermined regular intervals. Further, the rotation of the rotary drum section 30 is controlled on the basis of the recorded control pulses. Therefore, it is possible to drive the magnetic tape 1 at a constant travel speed. Further, it is also possible to detect the start and end of the magnetic tape 1 by detecting the presence or absence of the control pulses.

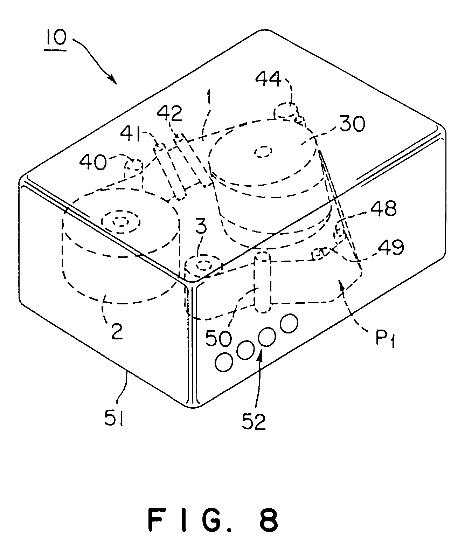

Further, as shown in Figs. 3 and 8, the supply reel 2 and the take-up reel 3 are both mounted on the supply reel base 12 and the take-up reel base 13, respectively so as not to be removed. The magnetic tape 1 is previously loaded along the predetermined tape path $P_1$ determined by a plurality of the fixedly disposed tape guide members 40 to 50 and the rotary drum section 30. And, an outer casing 51 of the apparatus 10 is attached along the chassis 11. This casing 51 is formed roughly airtightly to prevent the magnetic tape 1 from being removed from the apparatus 10 to the outside. In addition, this casing 51 is provided with a plurality of operating buttons 52 required for the recording and reproduction operation.

Therefore, it is possible to construct a throwaway type magnetic recording and reproducing apparatus 10 simply at a low cost. This is made possible by previously loading the magnetic tape 1 within the apparatus 10 when shipped from the factory in such a way as to be used repeatedly about 500 times. In this throwaway type apparatus, a user is not required to exchange the magnetic tape 1 with new one. And so the user and the makers are not required to consider the interchangeability of the magnetic tape 1. In addition, the outer casing 51 of the apparatus 10 is formed into a roughly airtight status. It is thus possible to easily design a dustproof and/or water-proof apparatus 10.

Further, in the apparatus 10 as constructed above, it is possible to mold various elements as fixed on the bottom surface 11a of the chassis 11 together with the chassis 11, as far as dimensional precision can be secured. The elements to be molded are the supply reel axle 14, the take-up reel axle 15, the axles of the first to fourth tape guide rollers 40, 44, 47 and 50, the first to sixth inclined poles 41, 42, 45, 46, 48 and 49. In this molding processing, it is possible to construct the apparatus 10 at still a lower cost.

Next, the second embodiment of the recording and reproducing apparatus according to the present invention will be described.

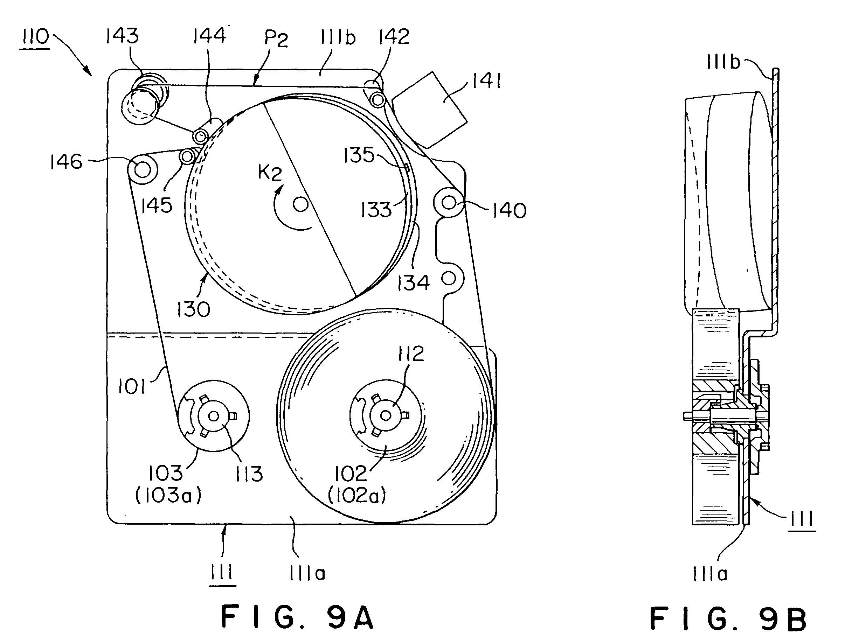

In the same way as with the case of the first embodiment, the second embodiment is characterized as shown in Figs. 9A and 9B, in that a magnetic tape 101 is loaded in a recording and reproducing apparatus 110 without use of any tape cassette. Further, audio and/or video signals can be recorded and reproduced in and from the loaded magnetic tape 101 without removing the tape 101 from the apparatus 110. The recording and reproduction are done through helical scanning operation by use of a magnetic head 135 mounted on a rotatable drum 134 of a rotary drum section 130. Further, in the apparatus 110, the rotary drum 134 of the rotary drum section 130 is disposed rotatably in an arrow direction $K_2$ (clockwise direction). This is opposite of the direction in the first embodiment.

As shown in Figs. 9A and 9B, a chassis 111 used as a base is formed by bending a plate. A first flat surface 111a is formed on the front side of the chassis 111. And, a second flat surface 111b is formed on the rear side of the chassis 111 at a position whose height is one stage lower than the first flat surface 111a.

On the front side of the apparatus 110, a pair of reels 102 and 103 around each of which the magnetic tape 101 is wound are rotatably disposed on a pair of reel bases 112 and 113, respectively. Both reel bases are mounted on the first flat surface 111a of the chassis 111. Further, on the rear side of the apparatus 110, the rotatable drum 134 of the rotary drum section 130 is disposed rotatably in the arrow direction $K_2$. Thus, the left side reel 102 is a supply reel and the right side reel 103 is a take-up reel.

Each of these supply reel 102 and take-up reel 103 is not formed with a flange for restricting the magnetic tape 101 in the width direction. Therefore, the magnetic tape 101 is wound around a pair of small-diameter reel hubs 102a and 103a. And, the reel hubs 102a and 103a are fitted to a pair of the reel bases 112 and 113, respectively so as to be rotated therewith.

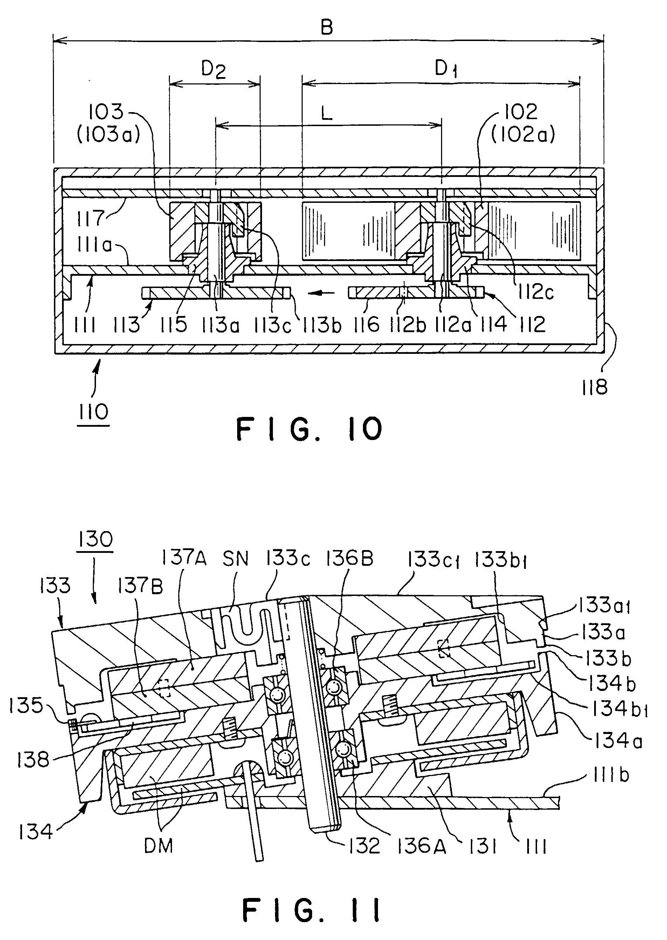

Here, as shown in Fig. 10 in an enlarged scale, a supply reel bearing 114 and a take-up reel bearing 115 are fixed on the first flat surface 111a of the chassis 111. The bearings 114 and 115 are so provided that they are separated from each other by a distance. The left side supply reel base 112 and the right side supply reel base 113 are rotatably fitted to the supply reel bearing 114 and the take-up reel bearing 115, respectively.

In the supply reel base 112, a small diameter gear 112b is pressure-fitted to the lower end of a reel axle 112a. The gear 112b is positioned on the reverse surface of the first flat surface 111a. The reel axle 112a is fitted to the supply reel bearing 114 from the reverse surface of the first flat surface 111a. And, a drive claw 112c engageable with the reel hub 102a is pressure-fitted to the upper end of the reel axle 112a.

In the take-up reel base 113, a large diameter gear 113b is pressure-fitted to the lower end of a reel axle 113a. The gear 113b is positioned on the reverse surface of the first flat surface 111a. The reel axle 113a is fitted to the take-up reel bearing 115 from the reverse surface of the first flat surface 111a. And, a drive claw 113c engageable with the reel hub 103a is pressure-fitted to the upper end of the reel axle 113a. Therefore, the supply reel 102 and the take-up reel 103 are both not easily removed from the supply reel base 112 and the take-up reel base 113, respectively.

In addition, an idler gear 116 is pivotally supported by an idler arm (not shown) between the supply reel base 112 and the take-up reel base 113. In Fig. 10, the idler gear 116 is engaged with the small-diameter gear 112b of the supply reel base 112 to rotate the base 112. As shown by an arrow, the idler gear 116 can be engaged with the large-diameter gear 113a of the take-up reel base 113 to rotate the base 113.

A rotating power of the idler gear 116 is transmitted from a reel motor (not shown) through a speed reduction mechanism with a gear train (not shown). The magnetic tape 101 is driven in the normal direction at a constant travel speed when the idler gear 116 is geared with the large-diameter gear 113b of the take-up reel base 113. On the other hand, the magnetic tape 101 is driven in the rewinding direction at a high travel speed when the idler gear 116 is geared with the small-diameter gear 112b of the supply reel base 112. As described above, in this apparatus 110, the magnetic tape 101 is driven at a constant speed by a reel-driving method, not a conventional capstan-driven method.

as already described, the supply reel 102 and the take-up reel 103 are both formed with no reel flange in order to reduce the size of the apparatus 110. The distance L between the center of the supply reel bearing 114 and that of the take-up reel bearing 115 can be determined short, as compared with the case where the reels formed with reel flanges are used. In more detail, the bearings 114 and 115 are so provided that the distance L therebetween is set longer than $D_1 + D_2$, and shorter than $2 \times D_1$ as $(D_1 + D_2) < L < 2 \times D_1$, where $D_1$ denotes the maximum winging diameter of the magnetic tape 101 wound around the supply reel hub 102a and $D_2$ denotes the minimum winging diameter of the magnetic tape 101 wound around the take-up reel hub 102a. It is thus possible to reduce the width dimension B of the apparatus 110.

As already described, the supply reel 102 and the take-up reel 103 are both formed as flange-less type. Instead of the flange, the lower end portion of the magnetic tape 101 wound around the supply reel 102 and the take-up reel 103 is restricted in the width direction by the first flat surface 111a of the chassis 111 serving as a restriction plate. Further, the upper end portion of the magnetic tape 101 is restricted in the width direction by a restriction plate 117 disposed over and in the close vicinity of the reels 102 and 103.

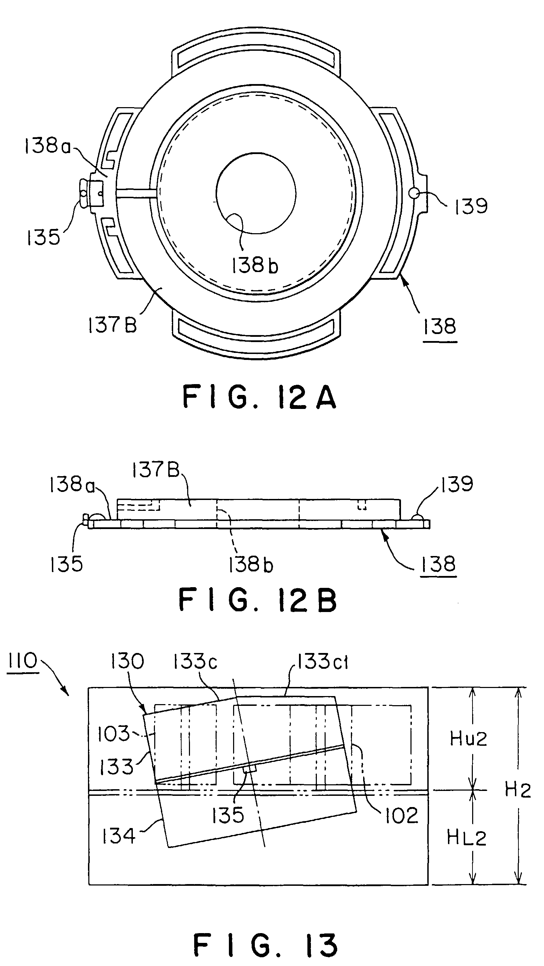

The rotary drum section 130 disposed on the rear side of the apparatus 110 shown in Fig. 9A will be described hereinbelow with reference to Figs. 11, 12A and 12B.

As shown in Fig. 11, in the rotary drum section 130, a triangular shaped drum base 131 is fixed on the second flat surface 111b of the chassis 111. A drum axle 132 is pressure-fitted to the triangular drum base 131.

Over the drum base 131, a rotatable drum 134 provided with a magnetic head 135 is rotatably supported by the drum axle 132 via two bearings 136A and 136B. Both bearings are fitted to the drum axle 132. Further, a fixed drum 133 is disposed over the rotatable drum 134 coaxially with the drum 134. In this case, a part of the central portion of the fixed drum 133 is cut out. An elastic deformable snap member SN is inserted into this cutoff portion. The snap member SN is thus intervened between the fixed drum 133 and the drum axle 132 in order to fix the drum 133 to the drum axle 132. In the second embodiment, the lower side rotatable drum 134 is disposed in the vicinity of the chassis 111. On the other hand, the upper side fixed drum 133 is disposed away from the chassis 111. This drum arrangement is the opposite of that in the first embodiment.

The fixed drum 133 and the rotatable drum 134 are both formed into cylindrical shape by use of a resin material. The reason why a resin is used is that the apparatus 110 can be constructed at such a low cost as to become a throwaway apparatus, that is, to such an extent as to be durable during the life time of the magnetic tape 101.

In Fig. 11, an outer circumferential surface 133a of the fixed drum 133 and an outer circumferential surface 134a of the rotatable drum 134 are formed in the same diameter. A lead $133a_1$ for guiding the magnetic tape 101 in helical manner is formed in the surface 133a. Instead of the lead $133a_1$, two flanged and inclined poles of different heights are disposed in the vicinity of the tape inlet and outlet portions of the rotary drum section 130, respectively. And, the magnetic head 135 is attached to the upper surface (134b) side of the rotatable drum 134 near the surface 134a. The magnetic head 135 thus projects slightly downward.

A circular recessed portion $134b_1$ is formed on the upper surface (134b) side of the rotatable drum 134 with the drum axle 132 as its center. And, a rotatable side rotary transformer 137B is fixed to the circular recessed portion $134b_1$ by use of a bonding agent.

Further, another circular recessed portion $133b_1$ is formed on the lower surface (133b) side of the fixed drum 133 with the drum axle 132 as its center. The lower surface 133b faces the upper surface 134b. And, a fixed side rotary transformer 137A is fixed to the circular recessed portion $133b_1$ by use of a bonding agent.

Figures 12A and 12B show the arrangement made before the rotatable side rotary transformer 137B is perfectly fixed to the circular recessed portion $134b_1$ of the rotatable drum 134. As shown, the rotatable side rotary transformer 137B is previously attached to the upper surface (138a) side of the roughly circular printed circuit board 138 coaxially with a central hole 138b. The magnetic head 135 is previously attached to the outer circumferential portion of the upper surface 138a of the printed circuit board 138. And, a balancing weight 139 having the same weight as that of the magnetic head 135 is previously attached to the outer circumferential portion of the upper surface 138a. The balancing weight 139 is attached at such a position that it is separated from the magnetic head 135 by 180 degrees so as to face each other. Here, the magnetic head 135 is so constructed as to record and reproduce both video and audio signals in and from the magnetic tape 101 simultaneously.

After this previous arrangement, the rotatable side rotary transformer 137B mounted on the printed circuit board 138 is perfectly fixed to the circular recessed portion $134b_1$ of the rotatable drum 134. The rotary transformer 137B is fixed in such a way that it faces the fixed side rotary transformer 137A fixed to the circular recessed portion $133b_1$ of the fixed drum 133 with an extremely small gap between the two rotary transformers 137A and 137B.

In this second embodiment, the apparatus 110 is of self recording and reproducing type and thereby the magnetic tape 101 is not exchanged with new one. It is thus possible to directly mount the magnetic head 135 on the printed circuit board 138 without need of any height adjustment of the magnetic head 135 relative to the magnetic tape 101. In addition, the track width of the magnetic head 135 can be reduced as narrow as $10\,\mu m$, for instance. Further, the magnetic head 135 and the rotatable side rotary transformer 137B can be connected to each other by soldering them directly to the pattern of the printed circuit board 138. It is thus possible to facilitate the mounting construction of the magnetic head 135 and the rotatable side rotary transformer 137B onto the rotatable drum 134. This results in improvement of the workability and the reliability of the apparatus 110.

Further, in this construction, a drum motor DM mounted on the rotatable drum (134) side is driven to rotate the magnetic head 135, the rotatable side rotary transformer 137B and the printed circuit board 138 all together with the rotatable drum 134. Audio and/or video signals of the magnetic head 135 thus can be received and transmitted between the rotatable side rotary transformer 137B and the fixed side rotary transformer 137A.

Further, on the right side of the upper surface 133c of the fixed drum 133, an inclined surface $133c_1$ is formed in such a way that the right side of the upper surface 133c can be lowered horizontally in consideration of an inclination of the rotary drum section 130. It is thus possible to reduce the height of the rotary drum section 130 to that extent.

Here, a plurality of tape guide members arranged along a predetermined tape path $P_2$ to wind the magnetic tape 101 around the rotary drum section 130 will be described hereinbelow with reference to Fig. 9A.

Those guide members are fixedly arranged along a predetermined tape path $P_2$ on the chassis 11. More in detail, the guide members are arranged such that they are divided into the right and left sides of the rotary drum section 130, that is, the supply reel (102) side and the take-up reel (103) side.

In Fig. 9A, on the supply reel (102) side, a first tape guide roller 140 with a flange is stood vertically on the right side on the second flat surface 111b (Fig. 9B) of the chassis 111. The guide roller 140 guides the magnetic tape 101 taken out of the supply reel 102 in parallel to the chassis 111. On the downstream side of the first tape guide roller 140, an erasing head 141 is disposed that erases signals recorded on the magnetic tape 101 along the entire tape width. Further, on the downstream side of the erasing head 141, a first inclined pole 142, a second guide roller 143 formed with a flange, and a second inclined pole 144 are fixedly disposed to guide the magnetic tape 101 obliquely toward the inlet portion of the rotary drum 130.

On the other hand, on the take-up reel (103) side, a third inclined pole 145 is located in the vicinity of the tape outlet portion of the rotary drum section 130. The third inclined pole 145 is fixedly disposed along the magnetic tape 101 lowered obliquely downward by the lead $133a_1$ (shown in Fig. 11) of the fixed drum 133. Further, on the downstream of the third inclined pole 145, a second tape guide roller 146 with a flange is fixedly disposed on the left side of the second flat surface 111b of the chassis 111. The second tape guide roller 146 guides the magnetic tape 101 toward the take-up reel 103 in parallel to the chassis 111.

In this second embodiment, as shown in Fig. 13, the supply reel 102 and the take-up reel 103 are located on the fixed drum (133) side in height with respect to the rotary drum 134. This is because, after the magnetic tape 101 has been wound around the rotary drum section 130 over an about 340 degree range, the magnetic tape 101 taken out of the rotary drum section 130 can be repositioned to the height of the take-up reel 103 by use of only the single inclined poles 145.

Figure 13 shows height relationship among the reels 102 and 103, and the drums 133 and 134. In the figure, components, such as a reel motor (not shown), etc. are housed in a space within this height $H_{L2}$. In addition, the lower portion of the rotatable drum 134 is located deep into the space within this height $H_{L2}$. The height $H_{L2}$ denotes the height between the lower ends of both the supply reel 102 and the take-up reel 103, and the bottom surface of the apparatus 110 is denoted $H_{L2}$.

Further, the upper side of the rotatable drum 134 and the fixed drum 133 are housed in a space within this height $H_{U2}$. The height $H_{U2}$ denotes the height between the lower ends of both the supply reel 102 and the take-up reel 103, and the upper surface of the apparatus 110.

As described, the lower side of the rotatable drum 134 is located in the space within the height $H_{L2}$. It is thus possible to reduce the total height $H_2$ (=$H_{L2}$ + $H_{U2}$) of the second embodiment of the apparatus 110, as compared with the total height $H_1$ of the first embodiment. In addition, as already explained, it is possible to reduce the total height $H_2$ of the apparatus 110 by the inclined surface $133c_1$ formed on the right side of the upper surface 133c of the fixed drum 133.

In the second embodiment, the magnetic tape 101 wound around both the supply reel 102 and the take-up reel 103 is previously loaded along the predetermined tape path $P_2$ determined by a plurality of the fixedly disposed tape guide members 140 to 146 and the rotary drum section 130. It is thus possible to immediately record and reproduce audio and/or video signals in and from the magnetic tape 101. Further, the tape loading operation by use of conventional tape loading members, such as, a cassette holder and a plurality of tape loading members are not required. Thus, the construction of the apparatus 110 can be simplified.

Therefore, when the magnetic tape 101 is previously loaded within the apparatus 110 when shipped from the factory in such a way as to be used repeatedly about 500 times, it is possible to construct a throwaway type magnetic recording and reproducing apparatus 110 simply at a low cost. In this throwaway type apparatus, the user is not required to exchange the magnetic tape 101 with new one and thereby to consider the interchangeability of the magnetic tape 101. In addition, since the outer casing 118 (shown in Fig. 10) of the apparatus 110 is formed into a roughly airtight status, it is possible to easily design a dust-proof and/or water-proof apparatus 110.

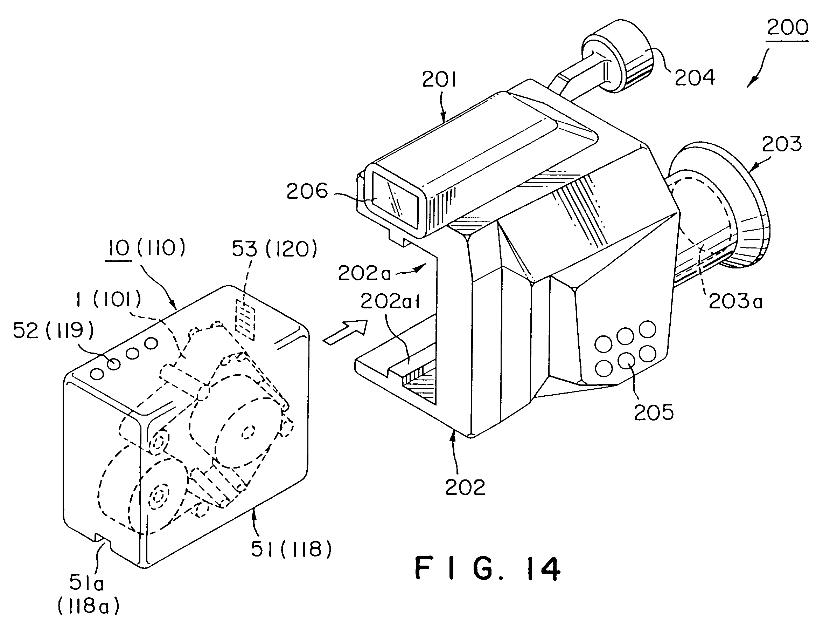

Next, a video camera using the magnetic recording and reproducing apparatus according to the present invention will be described hereinbelow with reference to Fig. 14.

In a video camera 200 shown in Fig. 14, the apparatus 10 (110) of the first (second) embodiment is removably housed in a housing section 202a of a camera casing (camera base) 202 of a camera section 201. The apparatus 10 (110) functions as a video tape recorder formed integral with a camera.

In more detail, in the camera section 201, on the front side of the camera casing 202, there are disposed a lens cylinder 203 having a camera lens 203a for photographing a subject, and a microphone 204. Further, on one side of the camera casing 202, a plurality of operating buttons 205 required to record and reproduce audio and video signals are arranged. On the rear side of the camera casing 202, a view finder 206 is disposed to see a subject to be photographed.

Further, a housing section 202a for housing the apparatus 10 (110) is largely opened on the rear and side surfaces of the camera casing 202. A guide rail $202a_1$ is further formed in the housing section 202a.

The casing 51 (118) of the apparatus 10 (110) is formed with a guide groove 51a (118a). The guide groove 51a (118a) of the apparatus 10 (110) is engaged with the guide rail $202a_1$ formed in the housing section 202a. It is thus possible to removably assemble the apparatus 10 (110) into the housing section 202a of the camera casing 202.

Here, when housed in the housing section 202a, the apparatus 10 (110) is of course locked by use of appropriate locking means (not shown), to prevent the apparatus 10 (110) from being removed from the camera casing 202.

Further, when housed in the housing section 202a, the apparatus 10 (110) is so housed in the camera casing 202 as not project from the other side surface of the camera casing 202. Further, after the apparatus 10 (110) has been housed in the camera casing 202, the operating buttons 52 (119) of the apparatus 10 (110) are completely covered with the housing section 202a so as not to be depressed. Here, however, when the apparatus 10 (110) is removed from the housing section 202a, the operating buttons 52 (119) can be of course depressed.

Further, the casing 51 (118) of the apparatus 10 (110) is provided with a connection portion 53 (120) on the surface that faces the camera casing 202. The connection portion 53 (120) electrically connects the apparatus 10 (110) with the camera section 201 when the apparatus 10 (110) is assembled with the camera 200 in the insertion direction. Therefore, when the apparatus 10 (110) is completely inserted into the camera casing 202, the apparatus 10 (110) can be connected to the camera section 201 electrically via both the connection portion 53 (120) and a connected portion (not shown) of the camera section 201. And so, after the apparatus 10 (110) has been housed in the housing section 202a of the camera casing 202, the apparatus 10 (110) can be operated by depressing the operating buttons 205 of the camera section 201.

As described above, in the video camera 200, the small-sized and light-weight magnetic recording and reproducing apparatus 10 (110) is removably attached to the housing section 202a of the camera casing 202 so as to be electrically connected to the camera section 201. It is thus possible to improve the portability of the video camera 200 with respect to both the size and weight. In addition, since it is unnecessary to exchange the magnetic tap 1 (101) with new one, the reliability and the manipulability of the video camera 200 can be improved. Further, when the apparatus 10 (110) is removed from the video camera 200 before it is used, it is possible to use the apparatus 10 (110) alone.

Further, in the third embodiment, the apparatus 10 (110) is removably attached to the video camera 200. However, without being limited only thereto, the apparatus 10 (110) can be housed in various video apparatus. Further, it is possible to mount the printed circuit board 23, the operating buttons 52 (119), etc., on the side of the video apparatus, without disposing these on the magnetic recording and reproducing apparatus 10 (110).

As described above, in the magnetic recording and reproducing apparatus and the video camera using the same apparatus according to the present invention, a plurality of tape guides and at least one inclined pole are fixedly disposed along a predetermined tape path on the chassis in order to guide the travel of the magnetic tape. And, the apparatus casing is roughly airtightly closed to prevent the magnetic tape from being removed from the apparatus to the outside. As a result, the magnetic tape wound around a pair of reels can be previously loaded along the predetermined tape path. And the magnetic tape can be guided by a plurality of the tape guides, at least one inclined pole, and the rotary drum section. Thus, the magnetic tape can be used immediately to record and reproduce audio and/or video signals.

Further, the present invention does not require the tape loading operation by use of conventional tape loading members, such as cassette holder and a plurality of movable tape loading members. Thus, not only the construction of the apparatus can be extremely simplified but also the size and the weight of the apparatus can be reduced and further the reliability of the apparatus can be improved. As a result, since the portability of the apparatus can be improved, it is possible to use the apparatus according to the present invention together with a liquid crystal display television set, for instance.

Further, since the magnetic tape usable for about 500-time recording and reproducing operation is previously loaded in the apparatus when shipped from the factory. It is thus possible to construct a simple and low-cost magnetic recording and reproducing apparatus of throwaway type. This eliminates need of any replacement of the magnetic tape with new one by a user and without considering any interchangeability of the magnetic tape. In addition, since the outer casing of the apparatus is constructed roughly airtightly, it is possible to design the dust-proof and water-proof magnetic tape recording and reproducing apparatus easily.

Further, in the magnetic recording and reproducing apparatus according to the present invention, the magnetic head and the rotating side rotary transformer both mounted on the printed circuit board are fixedly disposed within the rotary drum. This arrangement eliminates the height adjustment of the magnetic head relative to the magnetic tape and achieves a self recording and reproducing operation. Thus, the magnetic head and the rotating side rotary transformer can be connected to each other by directly soldering these parts to the pattern of the printed circuit board. Therefore, it is possible to simplify the mounting construction of the magnetic head and the rotating side rotary transformer on the rotary drum. Further, the workability and the reliability of the apparatus will be improved.

Further, in the magnetic recording and reproducing apparatus according to the present invention, the rotatable drum of the rotary drum section is rotatably disposed on the chassis side. And, the fixed drum is fixedly disposed over the rotatable drum coaxially therewith. Further, the height of a pair of the reels is biased toward the fixed drum side. A reel motor thus can be housed in a space less than the height between the lower ends of a pair of reels and the bottom surface of the apparatus. And, the lower end side of the rotatable drum can be located within a space less than the height between the lower end of the reels and the bottom surface of the apparatus. As a result, the total height of the apparatus can be reduced.

Further, in the magnetic recording and reproducing apparatus according to the present invention, a pair of the reels are formed as flange-less type so as to satisfy the following positional relationship $(D_1 + D_2) < L < 2 \times D_1$. Here, $D_1$ denotes the maximum winging diameter of the magnetic tape wound around the supply reel hub, $D_2$ denotes the minimum winging diameter of the magnetic tape wound around the take-up reel hub, and L denotes the axial distance between a pair of the reel bases. It is thus possible to reduce the width dimension B of the apparatus and thereby to further reduce the size and the weight of the apparatus.

Further, in the magnetic recording and reproducing apparatus according to the present invention, some restriction plates are provided in the vicinity of the lower end portion and/or the upper end portion of the magnetic tape wound around a pair of reel hubs. This arrangement restricts the width direction of the magnetic tape. It is thus possible to prevent the magnetic tape wound around a pair of reels from being dislocated in the width direction due to an external shock or during the tape travel.

Further, in the magnetic recording and reproducing apparatus according to the present invention, the apparatus is provided with the connection portion connected to the camera section electrically and further removably attached to the housing section of the camera casing. Thus, the video camera can be reduced in size and weight while improving the portability of the video camera. In this case, the magnetic tape is not required to be exchanged with new one on the apparatus side. Thus, the reliability and the manipulability of the video camera can be improved. Further, there exists such an advantage that when the video camera is not used and thereby the apparatus is removed from the video camera, the apparatus can be used alone.

**Claims**

1. A magnetic recording and reproducing apparatus in which a pair of reels (2,3, 102, 103) around each of which a magnetic tape (1, 101) is wound are mounted on a pair of reel bases (12,13,112, 113) rotatably disposed on a chassis (11, 111), the apparatus comprising: a drum section (30, 130) disposed along a predetermined tape path (P1, P2) and around which the magnetic tape (1, 101) is wound in helical manner;

   a tape driving mechanism to drive the magnetic tape at a constant travel speed;
   a plurality of tape guides (40, 44, 47, 50, 140, 143, 146) fixedly disposed along the predetermined tape path on the chassis, to guide the travel of the magnetic tape driven by the tape driving mechanism;
   a recording and reproducing circuit to record and reproduce data on and from the travelling magnetic tape; and
   a casing (10, 110) in which the drum section (30,130), the tape driving mechanism and the tape guides are installed, roughly airtightly closed at a peripheral portion thereof, for preventing the magnetic tape (1, 101) from being removed to the outside of the apparatus,

   the apparatus characterized by comprising:

   at least one inclined pole (41, 42,45, 46, 48, 4,9 142, 144, 145) fixedly disposed along the predetermined tape path ($P_1$, $P_2$) on the chassis, to guide travel of the magnetic tape,
   wherein, the drum section having a fixed drum (33, 133) to which a first rotary transformer (37A, 137A) is fixed, and a rotatable drum (34, 134) to which a magnetic head (35, 135) and a second rotary transformer (37B, 137B) are fixed, both the magnetic head and the second rotary transformer being attached to a printed circuit board (38, 138), the rotatable drum being disposed coaxially with the fixed drum in such a way that the first and second rotary transformers face each other to receive and transmit signals of the magnetic head therebetween, and a top surface of each reel being located on the fixed drum side,
   each reel is formed as flange-less type and with a reel hub (2a, 3a 102a, 103a) fitted to each reel base, and
   the apparatus further comprises restriction means (18, 19, 20, 111, 117) disposed close to at least one of a lower end portion and an upper end portion of the magnetic tape wound around the reel hubs, to restrict dislocation of the magnetic tape in a width direction thereof.

2. An apparatus according to claim 1 wherein the rotatable drum (34) is disposed over the fixed drum (33) and the fixed and rotatable drums are disposed within a space (HU1) between a bottom surface of each reel and an end of the apparatus.

3. An apparatus according to claim 1, wherein the fixed drum (133) is disposed over the rotatable drum (134), and the fixed drum and a portion of the rotatable drum are disposed within a space (HU2) between a bottom surface position of each reel and an end of the apparatus

4. An apparatus according to any of claims 1 to 3, wherein the magnetic tape is wound around the reel hubs so as to satisfy the following positional relationship:

$$(D_1 + D_2) < L < 2 \times D_1,$$

   where $D_1$ denotes a maximum winging diameter of the magnetic tape wound around one of the each reel hubs, $D_2$ denotes a minimum winging diameter of the magnetic tape wound around another of the reel hubs, and L denotes a distance between the reel bases.

5. The apparatus according to any of claims 1 to 3, the restriction means including a plurality of restriction plates arranged wide enough across centers of the reels and disposed close to upper and lower surfaces of the reels

6. The apparatus according to any of claims 1 to 3, comprising: a guide groove (51a, 118a) engaged with a guide section (202a1) formed on a camera (200);

locking means for locking the apparatus (10, 110) when attached to the camera (200); and a connector (53. 120) for electrically connecting the apparatus (10, 110) to the camera (200) in such a way that the apparatus is detachable to the camera.

7. A video camera casing (202) provided with a camera section (201), a view finder (206), and a magnetic recording and reproducing apparatus (10) as claimed in any one of claims 1 to 6.

**Patentansprüche**

1. Magnetisches Aufzeichnungs- und Wiedergabegerät, in dem zwei Wickel (2,3,102,103), um die jeweils ein Magnetband (1,101) gewickelt ist, auf zwei Wickelkerne (12,13,112,113) montiert sind, welche drehbar auf einer Grundplatte (11,111) angeordnet sind, wobei das Gerät aufweist:

   - Einen Trommelbereich (30,130), der an einer Stelle des Bandverlaufs (P1,P2) angeordnet ist und um den das Magnetband (1,101) spiralförmig gewickelt ist,
   - einen Antriebsmechanismus für das Band, um das Magnetband mit einer konstanten Laufgeschwindigkeit anzutreiben,
   - mehrere Bandführungen (40,44,47,50,140, 143,146), die entlang des Bandverlaufs fest auf der Grundplatte angeordnet sind, um den Lauf des Magnetbandes, das durch den Antriebsmechanismus für das Band angetrieben wird, zu führen,
   - eine Aufzeichnungs- und Wiedergabeschaltung, um Daten auf dem laufenden Magnetband aufzuzeichnen und von ihm wiederzugeben, und
   - ein Gehäuse (10,110), in das der Trommelbereich (30,130), der Antriebsmechanismus für das Band und die Bandführungen eingebaut sind und das entlang seines Umfangsbereichs annähernd luftdicht verschlossen ist, um zu verhindern, daß das Magnetband (1,101) aus dem Gerät heraus entfernt wird,

   wobei das Gerät dadurch gekennzeichnet ist, daß

   - es einen schräg stehenden Führungsstift (41,42,45,46,48, 49,142,144,145) aufweist, der an einer Stelle des Bandverlaufs (P$_1$,P$_2$) fest auf der Grundplatte angeordnet ist, um den Lauf des Magnetbandes zu führen, wobei der Trommelbereich eine feste Trommel (33,133), an der ein erster Dynamotor (37A,137A) befestigt ist, und eine drehbare Trommel (34,134), an der ein Magnetkopf (35,135) und ein zweiter Dynamotor (37B,137B) befestigt sind, aufweist, wobei sowohl der Magnetkopf als auch der zweite Dynamotor an eine gedruckten Schaltung (38,138) angeschlossen sind, die drehbare Trommel coaxial auf der festen Trommel derart angeordnet ist, daß der erste und der zweite Dynamotor einander gegenüber liegen, so daß sie Signale des Magnetkopfes empfangen und übertragen, und eine obere Fläche jedes Wickels auf der Seite der festen Trommel angeordnet ist,

   - jeder Wickel flanschlos und mit einer Wickelnabe (2a,3a, 102a,103a) ausgebildet ist, die jeweils an einem Wickelkern befestigt ist, und
   - das Gerät ferner Begrenzungseinrichtungen (18,19,20,111, 117) aufweist, die in der Nähe des unteren Endbereichs und des oberen Endbereichs des Magnetbandes, das um die Wikkelnaben gewickelt ist, angeordnet sind, um eine Verschiebung des Magnetbandes in Richtung seiner Breite zu verhindern.

2. Gerät nach Anspruch 1, wobei die drehbare Trommel (34) über der festen Trommel (33) angeordnet ist und die feste und die drehbare Trommel in einem Raum (HU1) zwischen der unteren Seite jedes Wikkels und einem Ende des Gerätes angeordnet sind.

3. Gerät nach Anspruch 1, wobei die feste Trommel (133) über der drehbaren Trommel (134) angeordnet ist, und die feste Trommel und ein Bereich der drehbaren Trommel in einem Raum (HU2) zwischen einer Position an der Unterseite jedes Wikkels und einem Ende des Gerätes angeordnet sind.

4. Gerät nach einem der Ansprüche 1-3, wobei das Magnetband um die Wickelnaben gewickelt ist, derart, daß es der folgenden Positionsbeziehung: (D$_1$ + D$_2$)< L < 2 x D$_1$ entspricht, wobei D$_1$ den maximalen Wickeldurchmesser des Magnetbandes, das um eine der jeweiligen Wickelnaben gewikkelt ist, angibt, D$_2$ einen minimalen Wickeldurchmesser des Magnetbandes, das um eine andere Wickelnabe gewickelt ist, angibt und L den Abstand zwischen den Wickelkernen angibt.

5. Gerät nach einem der Ansprüche 1-3, wobei die Begrenzungseinrichtungen mehrere Begrenzungsplatten aufweisen, die breit genug über den Mittelteilen der Wickel angeordnet sind und in der Nähe der oberen und unteren Flächen der Wickel angeordnet sind.

6. Gerät nach einem der Ansprüche 1-3, aufweisend

   - eine Führungsrinne (51a,118a) die mit dem Führungsbereich (202a) in Eingriff steht, der auf einer Kamera (200) ausgebildet ist,

- Verriegelungseinrichtungen, um das Gerät (10,110) zu verriegeln, wenn es an der Kamera (200) angebracht ist, und

- eine Anschlußvorrichtung (53,120), um das Gerät (10,110) an der Kamera (200) elektrisch derart anzuschließen, daß das Gerät von der Kamera abgenommen werden kann.

7. Videokameragehäuse (202), das mit einem Kamerabereich (201), einem Sucher (206) und mit einem nach einem der Ansprüche 1-6 beanspruchten magnetischen Aufzeichnungs- und Wiedergabegerät (10) versehen ist.

## Revendications

1. Dispositif d'enregistrement et de reproduction magnétique dans lequel une paire de bobines (2, 3, 102, 103) autour de chacune desquelles une bande magnétique (1, 101) est enroulée, est montée sur une paire de bases de bobines (12, 13, 112, 113) disposées de manière à pouvoir tourner sur un châssis (11, 111), le dispositif comprenant : une partie tambour (30, 130) disposée le long d'un chemin de bande prédéterminé (P1, P2) et autour de laquelle la bande magnétique (1, 101) est enroulée de manière hélicoïdale ;

un mécanisme d'entraînement de bande pour entraîner la bande magnétique à une vitesse de déplacement constante ; une pluralité de guides de bande (40, 44, 47, 50, 140, 143, 146) disposés de manière fixe le long du chemin de bande prédéterminé sur le châssis, pour guider le déplacement de la bande magnétique entraînée par le mécanisme d'entraînement de bande ; un circuit d'enregistrement et de reproduction pour enregistrer des données sur la bande magnétique en déplacement et reproduire des données à partir de celle-ci ; et un boîtier (10, 110) dans lequel sont installés la partie tambour (30, 130), le mécanisme d'entraînement de bande et les guides de bande, fermé de manière pratiquement hermétique à la partie périphérique de celui-ci, afin d'empêcher la bande magnétique (1, 101) d'être extraite du dispositif ;

le dispositif étant caractérisé en ce qu'il comprend :

au moins un poteau incliné (41, 42, 45, 46, 48, 49, 142, 144, 145) disposé de manière fixe le long du chemin de bande prédéterminé (P1, P2) sur le châssis, pour guider le déplacement de la bande magnétique ;

dans lequel, la partie tambour comporte un tambour fixe (33, 133) auquel un premier transformateur rotatif (37A, 137A) est fixé, et un tambour pouvant être entraîné en rotation (34, 134) auquel une tête magnétique (35, 135) et un deuxième transformateur rotatif (37B, 137B) sont fixés, la tête magnétique et le deuxième transformateur rotatif étant tous deux fixés à une carte de circuit imprimé (38, 138), le tambour pouvant être entraîné en rotation est disposé de manière coaxiale au tambour fixe de manière telle que les premier et deuxième transformateurs rotatifs se font face l'un l'autre afin de recevoir et d'émettre des signaux de la tête magnétique entre ceux-ci, et une surface supérieure de chaque bobine est située du côté du tambour fixe ; chaque bobine est formée selon un genre sans flasque et comporte un moyeu de bobine (2a, 3a, 102a, 103a) ajusté à chaque moyeu de bobine ; et le dispositif comprend en outre un moyen de restriction (18, 19, 20, 111, 117) disposé près au moins d'une partie parmi la partie extrémité inférieure et la partie extrémité supérieure de la bande magnétique enroulée autour des moyeux de bobine, pour restreindre un déplacement de la bande magnétique dans la direction de la largeur de celle-ci.

2. Dispositif conforme à la revendication 1 dans lequel le tambour pouvant être entraîné en rotation (34) est disposé au-dessus du tambour fixe (33) et le tambour fixe et le tambour pouvant être entraîné en rotation sont disposés à l'intérieur d'un espace ($HU_1$) entre une surface inférieure de chaque bobine et une extrémité du dispositif.

3. Dispositif conforme à la revendication 1, dans lequel le tambour fixe (133) est disposé au-dessus du tambour pouvant être entraîné en rotation (134), et le tambour fixe et une partie du tambour pouvant être entraîné en rotation sont disposés à l'intérieur d'un espace ($HU_2$) entre une surface inférieure de chaque bobine et une extrémité du dispositif.

4. Dispositif conforme à l'une quelconque des revendications 1 à 3, dans lequel la bande magnétique est enroulée autour des moyeux de bobine de manière à satisfaire à la relation de position suivante :

$$(D_1 + D_2) < L < 2 \times D_1,$$

où $D_1$ désigne un diamètre d'enroulement maximum de la bande magnétique enroulée autour de l'un des moyeux de bobine, $D_2$ désigne un diamètre d'enroulement minimum de la bande magnétique enroulée autour d'un autre des moyeux de bobine, et L désigne une distance entre les bases des bobines.

5. Dispositif conforme à l'une quelconque des revendications 1 à 3, le moyen de restriction comprenant une pluralité de plaques de restriction disposées de manière suffisamment large au travers des centres des bobines et disposées à proximité des surfaces supérieure et inférieure des bobines.

6. Dispositif conforme à l'une quelconque des revendications 1 a 3, comprenant : une rainure de guidage (51a, 118a) en contact avec un ensemble de guidage (202a1) formé sur une caméra (200) ;

   un moyen de verrouillage pour verrouiller le dispositif (10, 110) lorsqu'il est fixé à la caméra (200) ;
   et un connecteur (53, 120) pour relier électriquement le dispositif (10, 110) à la caméra (200) de telle manière que le dispositif soit amovible par rapport à la caméra.

7. Boîtier de caméra vidéo (202) muni d'une partie caméra (201), d'un viseur (206) et un dispositif d'enregistrement et de reproduction magnétique (10) tel que revendiqué dans l'une quelconque des revendications 1 à 6.

# FIG. 1
## PRIOR ART

FIG. 2

F I G. 3

F I G. 4

38

38 b

35

39

38 a

37 B

# F I G. 5 A

38

37 B

39

38 a

35

38 b

# F I G. 5 B

EP 0 768 667 B1

F I G. 6

F I G. 7

CONTROL PULSE

20

FIG. 8

FIG. 9A

FIG. 9B

EP 0 768 667 B1

F I G. 10

F I G. 11

F I G. I2 A

F I G. I2 B

F I G. I3

F I G. 14

EP 0 768 667 B1